# EUROPÄISCHE PATENTSCHRIFT

(11) **EP 1 275 428 B1**
(45) Veröffentlichungstag und Bekanntmachung des Hinweises auf die Patenterteilung: **23.03.2005**
(21) Anmeldenummer: 02015481.1
(22) Anmeldetag: 12.07.2002
(51) Int. Cl.: B01D 46/52

(54) **Flexibler Filter**
Flexible filter
Filtre flexible

(30) Priorität: 13.07.2001 DE 10134148; 08.08.2001 DE 10138880
(43) Veröffentlichungstag der Anmeldung: 15.01.2003
(73) Patentinhaber: helsa-automotive GmbH & Co. KG, 95482 Gefrees (DE)
(72) Erfinder: Bablitschky, Kerstin, 95236 Stammbach (DE); Föttinger, Peter, 95444 Bayreuth (DE)
(74) Vertreter: LOUIS- PÖHLAU- LOHRENTZ

(56) Entgegenhaltungen:
- WO-A-93/12858
- DE-A- 4 227 744
- DE-A- 4 323 136
- DE-A- 19 534 252
- DE-A- 19 931 214
- DE-A- 19 937 446
- DE-C- 19 510 793
- US-A- 5 603 747

## Beschreibung

Die Erfindung betrifft einen flexiblen Filter, der durch die zu reinigende Luft nicht nennenswert verformbar ist und der einen plissierten Filterpack aufweist, an dessen gefalteten Längsseiten streifenförmige Rahmenelemente mittels eines Klebers fixiert sind.

Ein solcher flexibler Filter dient zur Filtration von Fluidströmungen, beispielsweise zur Filtration einer Luftströmung, die dem Fahrzeuginnenraum eines Kraftfahrzeuges zugeführt wird.

Filter zur Filtration von Luftströmungen sind in einer Vielzahl verschiedener Ausführungsvarianten bekannt. Da die Wirksamkeit von Filtern insbesondere von der Größe der luftdurchströmten Filteroberfläche abhängig ist, kommen für Kfz-Innenraumluftfilter überwiegend plissierte, d.h. zick-zack-förmig gefaltete Filtermedien zum Einsatz, die in Abhängigkeit von der Faltungshöhe und dem Faltungsabstand des plissierten Filterpacks eine Vergrößerung der Medienfläche um den Faktor 4 bis 10 ermöglichen.

Durch die jeweilige Einbausituation des flexiblen Filters in einem Kraftfahrzeug kann es notwendig sein, daß der flexible Filter mit seinem plissierten Filterpack in einem gebogenen Zustand in der zugehörigen Filteraufnahme festgelegt wird oder gebogen in die Filteraufnahme eingeschoben werden muß. Desgleichen ist ein Einbau möglich, bei dem der plissierte Filterpack gebogen werden muß, um in die zugehörigen Filteraufnahme eingebaut werden zu können. In der Filteraufnahme kann der plissierte Filterpack dann ebenflächig zum Einsatz gelangen.

Ein flexibler Filter der eingangs genannten Art ist beispielsweise aus der DE 195 45 046 C2 bekannt. Die streifenförmigen Abdichtelemente an den gefalteten Längsseiten des plissierten Filterpacks sind dort als Armierungselemente in Form relativ dünner Streifen ausgebildet. Die Streifen sind bezüglich der Höhe des plissierten Filterpacks außermittig aufgeklebt, um zu erreichen, daß der Filter nur in einer Richtung biegbar ist. Dieser bekannte Filter ist mit dieser speziellen Armierung relativ unstabil und folglich nicht ohne weiteres betriebssicher. Er benötigt deshalb für einen sicheren abgedichteten Sitz in der zugehörigen Filteraufnahme noch zusätzliche stabilisierende und abdichtende Elemente.

Aus der EP 0 713 421 B1 ist eine Filterkonstruktion bekannt, bei der zur Stabilisierung des plissierten Filterpacks in den einzelnen Falten des plissierten Filtermediums dreieckförmige oder trapezförmige Kunststoff-Stützelemente angeordnet sind. Diese Elemente sind mit dem Filtermedium durch Einspritzen oder durch Ultraschallverschweißen verbunden. Die in Art von Kettengliedern nebeneinandergereihten Stützelemente ermöglichen ein begrenztes Verbiegen des Filters in entgegengesetzte Richtungen. Dieser bekannte Filter weist den Mangel auf, daß zu seiner Herstellung ein großer fertigungstechnischer Aufwand erforderlich ist. Außerdem ergibt sich aufgrund des zur Fixierung der Stützelemente am Filtermedium zum Einsatz kommenden Ultraschallschweißens oder Einspritzverfahrens eine Einschränkung hinsichtlich der verwendbaren Filtermaterialien. Durch die Verwendung der Stützelemente ist der Einsatz von speziell gestaltetem Filtermaterial erforderlich, d.h. es kann nur Filtermaterial eingesetzt werden, dessen Faltung an die Formgestaltung der Stützelemente angepaßt ist.

Die DE 43 45 129 A1 beschreibt einen Filter, bei dem das plissierte Filtermedium auf parallelen Klebstoffstreifen fixiert ist, die auf eine Trägerfolie aufgebracht sind. Die Faltenkanten des Filtermediums greifen hierbei zur Fixierung in die Klebstoffstreifen ein. Der Filter ist in ein kastenförmiges Gehäuse eingesetzt, wobei durch die parallelen Klebstoffstreifen eine als Strömungsberuhiger wirkende Zone ausgebildet ist, um eine quasi laminare Strömung und einen verminderten Strömungswiderstand des Filters zu erzielen. Bei Ausführungen dieses bekannten Filters, bei denen nach der Fixierung des Filters auf dem parallelen Klebstoffstreifen die Trägerfolie abgezogen wird, ergibt sich der Mangel, daß der Filter gegen Stauchung in Längs- und Querrichtung instabil ist. Ein weiterer Mangel ergibt sich mit den in Längsrichtung die Faltkanten schneidenden parallelen Klebestreifen bei sämtlichen Ausführungen dieses Filters mit oder ohne Trägerfolie durch die Reduktion der Filterfläche.

Aus der EP 0 170 643 A2, aus der WO 97/10040 und aus der EP 0 438 639 A1 sind Filter bekannt, bei welchen der plissierte Filterpack jeweils an seinen quer zur Faltung verlaufenden Längsseiten über komplementär ineinandergreifende, verzahnte, starre Befestigungselemente formschlüssig gehalten wird. Das bedingt einen relativ großen Herstellungsaufwand. Außerdem sind diese bekannten Filter nicht flexibel, sondern durch die starren Befestigungsteile starre Gebilde.

Die GB 1 570 385, die DE 41 43 237 A1 und die DE 40 10 732 A1 offenbaren ebenfalls Filter mit einem plissierten Filterpack. Auch diese bekannten Filter weisen jeweils einen starren Rahmen auf, d.h. diese bekannten Filter sind ebenfalls nicht flexibel.

Aus der EP 0 380 026 ist ein Filter bekannt, bei dem ebenflächige Filtermedien vorgesehen sind, die in gekrümmte Führungsnuten eines flexiblen Filterrahmens einschiebbar sind. Die Medienfläche derartiger planer Filtermedien ist im Vergleich zur Medienfläche eines plissierten Filterpacks gering, wie eingangs erwähnt worden ist. Der Einsatz eines plissierten Filtermediums, d.h. eines plissierten Filterpacks, ist hier nicht möglich.

Die ältere Patentanmeldung DE 100 55 732 beschreibt einen Filter der eingangs genannten Art zur Filtration eines Fluidstromes, insbesondere zur Filtration eines Luftstromes, beispielsweise eines Luftstromes, der dem Fahrgastraum eines Kraftfahrzeuges zugeführt wird, mit einem flexiblen Faltenpack aus einem plissierte flexiblen Filtermedium, z.B. Filterpapier, Filtervlies o.dgl., wobei an gegenüberliegenden, quer zu den Falten des Filtermediums verlaufenden Längsseiten des Faltenpacks jeweils ein flexibles, vorzugsweise streifenförmiges Randelement angeordnet ist, das sich quer zu den Faltenmündungen, diese zumindest abschnittweise überdeckend, erstreckt und dabei an dem Filtermedium im Überdeckungsbereich fixiert ist. Bei diesem Filter ist im Bereich mindestens eines der flexiblen Randelemente eine nach außen auskragende flexible Blende angeordnet, die mit dem flexiblen Randelement und/oder mit dem Filtermedium verbunden ist. Die Flexibilität ist bei diesem Filter nicht einstellbar.

Die DE 195 28 670 A1 offenbart einen flexiblen, durch die zu reinigende Luft nicht nennenswert verformbaren Faltenfiltereinsatz mit einer Faltung, die an den Längsseiten verschlossen ist. Die Faltung ist beiderseits durch flexible Bänder verschlossen, die in Längsrichtung zusammenstauchbar sind. Durch diese in Längsrichtung zusammenstauchbaren Bänder ist dieser bekannte Filter in Längsrichtung nicht besonders maßstabil. Außerdem ist die Flexibilität dieses bekannten Filters nicht an den jeweiligen individuellen Anwendungsfall wunschgemäß anpaßbar.

Der Erfindung liegt die Aufgabe zugrunde, einen flexiblen Filter der eingangs genannten Art zu schaffen, der einfach herstellbar ist und der trotz seiner Flexibilität in Längsrichtung eine optimale Formstabilität aufweist.

Diese Aufgabe wird bei einem flexiblen Filter der eingangs genannten Art erfindungsgemäß durch die Merkmale des Anspruches 1, d.h. dadurch gelöst, daß die streifenförmigen Rahmenelemente in ihrer Längsrichtung eine Dehnung aufweisen, die kleiner ist als die Dehnung in ihrer Querrichtung.

Dadurch, daß bei dem erfindungsgemäßen flexiblen Filter die streifenförmigen Rahmenelemente in ihrer Längsrichtung eine Dehnung aufweisen, die kleiner ist als die Dehnung in ihrer Querrichtung, ergibt sich der Vorteil, daß bei einer gegebenen Flexibilität in Längsrichtung eine gewünschte Formstabilität erzielt wird. Die Stauchbarkeit der Rahmenelemente in Längsrichtung beträgt weniger als 2,5 %. Diese geringe Stauchbarkeit in Längsrichtung ermöglicht einen problemlosen Einbau des flexiblen Filters in seiner Längsrichtung in einen Schacht einer Filteraufnahme, d.h. das Einschieben des flexiblen Filters durch den Schacht hindurch in die Filteraufnahme hinein ist problemlos möglich. Im Vergleich hierzu besteht bei einem Filter mit einer zu hohen Stauchbarkeit der streifenförmigen Rahmenelemente die Gefahr, daß die Stirnseite des Filters, die in der Filteraufnahme vorne liegt und deshalb eventuell nicht einsehbar ist, sich vor Erreichen der Endlage des Filters im Schacht verklemmt und nicht bis an den zugehörigen Anschlag gedrückt wird. Durch die auf diese Weise entstandene Lücke zwischen der Stirnseite des Filters und dem genannten Anschlag der Filteraufnahme kann ungefilterte Luft in den Innenraum des Kraftfahrzeuges gelangen.

Wie bereits erwähnt worden ist, ist es bei dem erfindungsgemäßen flexiblen Filter bevorzugt, wenn die Stauchbarkeit des jeweiligen Abdichtelementes in Längsrichtung ≤ 2,5 % beträgt.

Das jeweilige Abdichtelement des erfindungsgemäßen flexiblen Filters kann ein voluminöses Vlies sein. Vorzugsweise handelt es sich um einen vermaschten Vliesstoff aus PES/Co-PES, der nach dem Multiknit-Verfahren hergestellt ist. Ein solcher Vliesstoff hat sich aufgrund der in der nachfolgenden Tabelle 1 beschriebenen Produkteigenschaften für die Anwendung beim erfindungsgemäßen flexiblen Filter als ideal erwiesen.

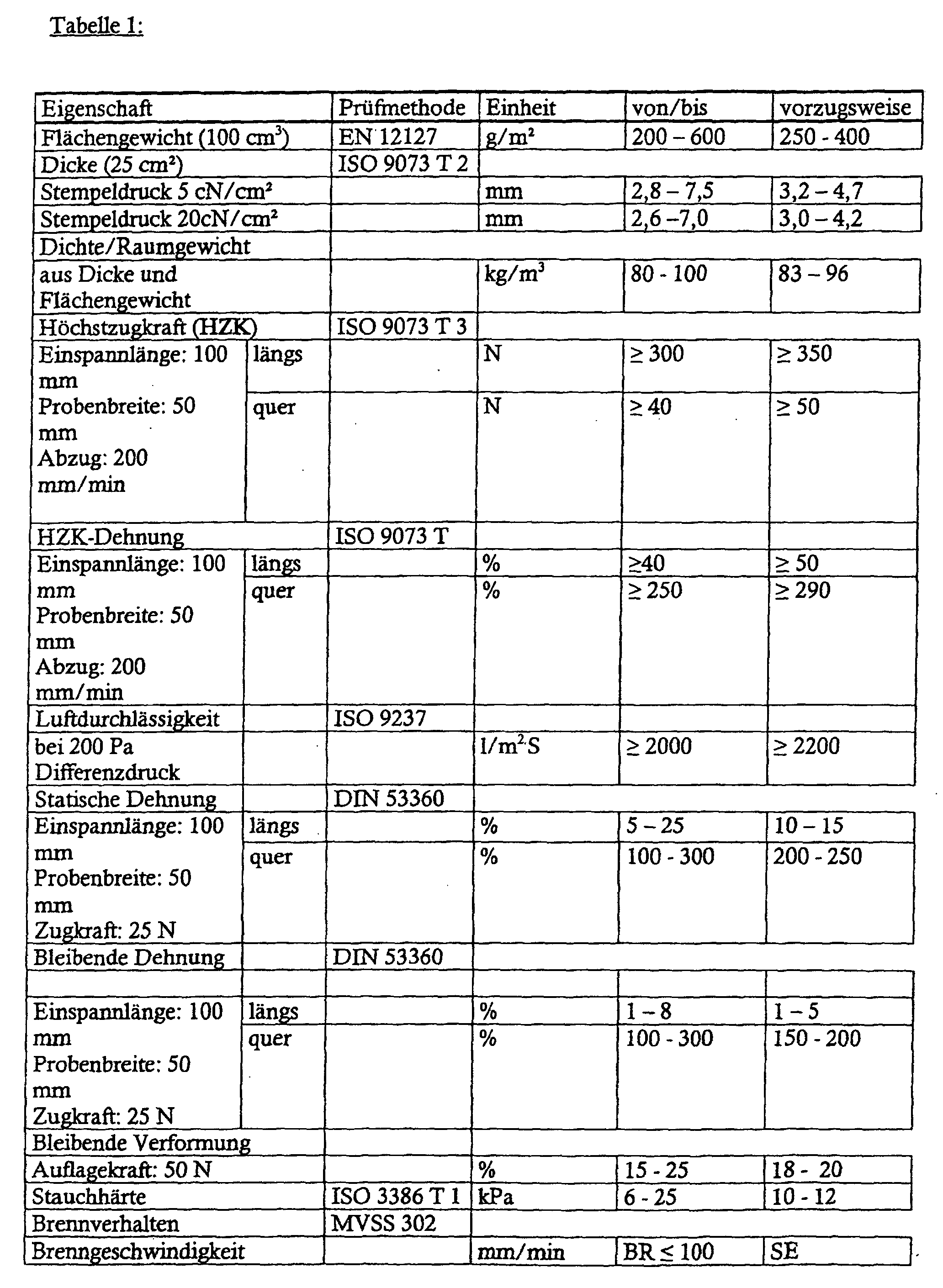

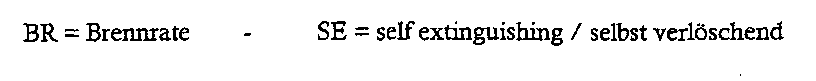

Das oben beschriebene dreidimensionale Flächengebilde besteht aus 100 % Fasern. Die beiden Oberseiten des Vliesstoffes sind durch Faservermaschungen jeweils zu einer geschlossenen Oberfläche geformt und durch nahezu senkrecht orientierte Fasern miteinander verbunden. Durch die geschlossene Oberfläche wird einerseits die Beschichtung mit dem Kleber, bei dem es sich vorzugsweise um einen Hotmeltkleber handelt, erleichtert, und andererseits eine zuverlässige Kontaktfläche zur Filteraufnahme hin gewährleistet. Als Basisprodukte dienen in der Regel ein oder zwei nach dem erwähnten Kunit-Verfahren einseitig vermaschte Vliesstoffe. Hierdurch ist die zusätzliche Einbringbarkeit durchstechbarer, flächiger pastöser und/oder streuförmiger Medien gegeben. Das jeweilige Rahmenelement kann mit Aktivkohle ausgerüstet sein, um in einem Fahrzeug ein hochwertiges Filtersystem insbesondere für die Geruchsfiltration zu gewährleisten. Bei einem solchen hochwertigen Filtersystem kann sich bereits eine geringe Leckluftmenge störend bemerkbar machen. Werden die Fasern der streifenförmigen Rahmenelemente in mindestens einem vorgeschalteten Arbeitsschritt mit Aktivkohle ausgerüstet, so ist mit Hilfe dieses Aktivkohlepulvers eine Geruchsfiltration der genannten geringen Leckluftmenge möglich.

Bei dem erfindungsgemäßen flexiblen Filter ist es möglich, daß die Flexibilität des jeweiligen Rahmenelementes durch die Dicke der auf das Rahmenelement aufgebrachten Kleberschicht bestimmt ist. Diese Einstellbarkeit der Flexibilität und Biegsamkeit des Filters über den Kleberauftrag, vorzugsweise Hotmeltkleberauftrag, stellt eine gegenüber dem Stand der Technik neuartige Variationsmöglichkeit dar. Erfindungsgemäß ist vorgesehen, daß für die feste Verbindung der streifenförmigen Rahmenelemente mit dem plissierten Filterpack ein Hotmeltkleber eingesetzt wird, der im verfestigten Zustand nur begrenzt verformbar bzw. begrenzt elastisch ist. Zweckmäßigerweise kommt ein Hotmeltkleber mit einer Schorhärte A von ca. 83 zur Anwendung. Die Dicke des kontinuierlichen Kleberauftrags kann an dem jeweiligen Einsatzzweck individuell angepaßt werden: Wird ein Filter gewünscht, der besonders dimensionsstabil und nur eingeschränkt biegbar sein soll, d.h. dessen Biegeradius beispielsweise > 0,5 m ist, so wird der Klebstoffauftrag z.B. auf eine Dicke von > 0,8 mm bzw. > 800 g/m² eingestellt. Ist im Gegensatz hierzu die Flexibilität des Filters von besonderer Bedeutung, d.h. beträgt der Biegeradius des Filters beispielsweise ca. 5 cm, so ist das durch eine Reduzierung der Klebstoffauftragsmenge auf ca. 0,4 mm Dicke bzw. 400 g/m² erreichbar. Diese Einstellbarkeit der Flexibilität des jeweiligen Rahmenelementes und folglich der Biegsamkeit des erfindungsgemäßen flexiblen Filters durch die Dicke der Kleber- insbesondere Hotmeltkleberschicht unterscheiden sich von den Möglichkeiten bekannter Filter, bei welchen die Biegsamkeit lediglich durch die Auswahl des Materials für die streifenförmigen Rahmenelemente, von der jeweiligen Faltengeometrie, d.h. vom jeweiligen Faltenabstand und der jeweiligen Faltenhöhe sowie von der Beschaffenheit des zur Anwendung gelangenden Filtermediums abhängig möglich ist. Hier sind den Variationsmöglichkeiten während der Entwicklung - insbesondere bezüglich der Faltengeometrie und der Auswahl des Filtermediums - durch die technischen Vorgaben der Kunden, insbesondere was die zu erzielenden Leistungsmerkmale und die Kompatibilität des Filters in Bezug auf die Filteraufnahme betrifft, enge Grenzen gesetzt.

Erfindungsgemäß ist es möglich, daß das jeweilige Rahmenelement an seinem konvex auszuwölbenden Längsrand - zur Erhöhung seiner Flexibilität - Kerben aufweist. Durch solche Kerben bzw. Einschnitte am entsprechenden Längsrand des Rahmenelementes kann die Flexibilität des Filters erhöht werden, ohne daß die Stauchfestigkeit des Filters in Längsrichtung negativ beeinflußt wird. Durch eine solche Ausbildung der zuletzt genannten Art wird der Filter in einer bestimmten Biegerichtung flexibler. Das kann als Poka Yoke zum Schutz gegen ein falsches Einsetzen bzw. Einbauen im Fahrzeug benutzt werden.

Der erfindungsgemäße flexible Filter erlaubt den Einbau in eine nicht ebene Filteraufnahme, die an einer schwer zugänglichen Stelle im Einbauraum eines Fahrzeuges liegen kann. Das stellt einen wesentlichen Vorteil dar. Außerdem sind durch die erfindungsgemäßen streifenförmigen Rahmenelemente zwischen dem Filter und dem Filteraufnahmeraum relativ große Abmessungstoleranzen möglich. Ein weiterer Vorteil des erfindungsgemäßen Filters besteht darin, daß gekrümmte, gekurvte Filter, die bislang mit starren Rahmensystemen in ihrer Herstellung aufwendig waren, jetzt ungekurvt eben und damit wesentlich wirtschaftlicher hergestellt werden können, weil die erfindungsgemäßen flexiblen Filter erst unmittelbar vor ihrem Einbau in den zugehörigen Einbauraum in die gewünschte Form gebracht werden.

Die streifenförmigen Rahmenelemente, mit welchen der plissierte Faltenpack an seinen gefalteten Längsseiten verschlossen wird, sind in Längsrichtung dehnbar, woraus die Flexibilität des Filterrahmens und somit des Filters resultiert. Ein Vorteil des erfindungsgemäßen Filters besteht darin, daß das zu erzielende Maß der Flexibilität und der Dimensionsstabilität in Längsrichtung durch die Dicke des Kleberinsbesondere Hotmeltkleberauftrags an die jeweilige Einbausituation angepaßt werden kann. Aufgrund der solchermaßen einstellbaren Elastizität des Materials der streifenförmigen Rahmenelemente ist eine steuerbare Biegung des Filters um eine zur Faltung parallel liegende Achse und/oder eine Biegung um mindestens eine zur Faltung quer orientierte Achse möglich. Desgleichen sind Biegungen bezüglich einer Achse, die zur Faltung parallel verläuft, gleich und/oder gegensinnig realisierbar. Auf diese Weise ist das Einschieben oder Einsetzen des flexiblen Filters in Richtung quer zu seiner Faltung in eine entsprechend geformte Filteraufnahme möglich. Die einstellbare Verformbarkeit des erfindungsgemäßen flexiblen Filters erlaubt im Gegensatz zu starren Filtern den Einbau in Filteraufnahmen, die an schwer zugänglichen Stellen im Einbauraum des jeweiligen Fahrzeuges liegen. Im Gegensatz zu bekannten flexiblen Rahmensystemen, bei welchen eine Stauchung in Längsrichtung in großem Umfang möglich ist, wird durch die deutlich verringerte und zudem einstellbare Stauchbarkeit der streifenförmigen Rahmenelemente des erfindungsgemäßen flexiblen Filters in Längsrichtung ein fehlerhaftes Einschieben des flexiblen Filters in einen Aufnahmeschacht nahezu ausgeschlossen.

Der Kleber, insbesondere Hotmeltkleber, kann beispielsweise kontinuierlich auf die streifenförmigen Rahmenelemente aufgesprüht oder mittels einer Breitschlitzdüse auf das jeweilige streifenförmige Abdichtelement appliziert werden. Anschließend wird der Faltenpack mit seinen gefalteten Längsseiten an die mit dem Kleber beschichtete Seite des jeweiligen streifenförmigen Rahmenelementes gepreßt. Auf diese Weise ist eine Verbindung der streifenförmigen Rahmenelemente mit ein- und mehrlagigen Filtermedien möglich, bei denen es sich beispielsweise um Partikelfiltermedien und/oder um Geruchsfiltermedien handelt. Der Kleber kann hierbei vollflächig auf einer Seite des jeweiligen streifenförmigen Rahmenelementes appliziert werden.

Desgleichen ist es möglich, den Kleber nur in der Breite auf das jeweilige streifenförmige Rahmenelement aufzubringen, die der Höhenabmessung des plissierten Faltenpacks entspricht.

Als zweckmäßig hat es sich erwiesen, wenn die Querabmessung des jeweiligen streifenförmigen Rahmenelementes größer ist als die Höhenabmessung des plissierten Filterpacks, wobei die Rahmenelemente an- und abströmseitig mit einem Überstand geringfügig über den plissierten Filterpack überstehen. Dieser Überstand kann ≤ 2 mm betragen. Wird der Kleber auf das jeweilige streifenförmige Rahmenelement derartig aufgebracht, daß der genannte Überstand nicht mit Kleber beschichtet ist, so ist eine verbesserte Abdichtung des Filters in Bezug auf die Filteraufnahme erzielbar. Das ist insbesondere dann der Fall, wenn die Breite zwischen den streifenförmigen Rahmenelementen größer ist als die Schachthöhe der Filteraufnahme. Die nicht mit Kleber beschichteten Überstand-Bereiche des Filters werden dann nämlich komprimiert. Auf diese Weise wird auch ein Klappern des Filters in der Filteraufnahme, wie sie durch den zeitweisen Kontakt des Filtermediums mit der Filteraufnahme bei Erschütterungen sonst nicht vermeidbar sind, vermieden. Das Maß der Biegsamkeit des Filters in Bezug auf die Achsen parallel zur Faltung und das Maß der Biegung des Filters in Bezug zu Achsen quer zur Faltung ist aufgrund der über den Klebstoffauftrag einstellbaren Flexibilität des Filterrahmens steuerbar, wie bereits ausgeführt worden ist.

Eine weiche Ausführung des Materials streifenförmigen Rahmenelemente erlaubt eine Dickenstauchung desselben in der Größenordnung von mindestens 25 % - in Abhängigkeit von der Stauch- bzw. Auflagekraft. Diese Abhängigkeit ist für ein bevorzugtes Material für die streifenförmigen Rahmenelemente in der nachfolgenden Tabelle 2 dargestellt.

**Tabelle 2:**

| Auflagekraft [N/cm2] | Materialdicke [%] |
|---|---|
| 5 | 100 |
| 20 | 93 |
| 40 | 90 |
| 80 | 82 |
| 120 | 76 |
| 160 | 70 |
| 320 | 56 |
| 475 | 44 |
| 635 | 40 |
| 800 | 35 |

Um eine gute Abdichtung des erfindungsgemäßen flexiblen Filters in der Filteraufnahme zu erzielen, ist die Breite des Filters im unbelasteten, d.h. nicht eingebauten Zustand, größer als die Breite der Filteraufnahme. Beim Einbau des erfindungsgemäßen Filters in die Filteraufnahme werden die streifenförmigen Rahmenelemente in ihrer Dicke komprimiert. Auf diese Weise ergibt sich eine kraftschlüssige Passung, d.h. eine abdichtende Pressung d.h. der streifenförmigen Rahmenelemente in Bezug auf die Filteraufnahme. Ein weiterer Vorteil besteht darin, daß bei der Herstellung des erfindungsgemäßen Filters größere Breitentoleranzen als bei nicht verformbaren Rahmenmaterialien möglich sind. Das wirkt sich auf die erzielbaren Produktionsgeschwindigkeiten und damit auf die Herstellungskosten positiv aus.

Die streifenförmigen Rahmenelemente weisen vorzugsweise eine Dicke im Bereich zwischen 3,2 und 4,7 mm auf, wie sich aus Tabelle 1 ergibt. Die untere Grenze der Dickenabmessung ist insbesondere durch die Verarbeitbarkeit während des Herstellungsprozesses und durch die Gleichmäßigkeit des Materials bestimmt. Die streifenförmigen Rahmenelemente verleihen dem erfindungsgemäßen flexiblen Filter die erforderliche Stabilität. Würde anstelle der erfindungsgemäßen streifenförmigen Rahmenelemente lediglich ein Hotmeltstreifen durch ein Transferverfahren auf den plissierten Filterpack aufgebracht, so wäre bei den angewandten Klebern die erforderliche Festigkeit des Rahmens nicht gewährleistbar. Bei einer mechanischen Belastung bzw. Verbiegung würde der auf die Längsstirnseiten des plissierten Faltenpacks aufgebrachte Kleberfilm reißen. Im Gegensatz hierzu bildet die Kombination der streifenförmigen Abdichtelemente mit dem Hotmeltkleberauftrag definierter Dicke einen wesentlichen Vorteil.

Das Material für die streifenförmigen Rahmenelemente kann gleichzeitig eine Dichtfunktion zu den Wänden der Filteraufnahme bewirken, wenn die Filteraufnahme entsprechend konzipiert ist. In diesem Falle muß das Rahmenmaterial eine solche Dicke aufweisen, daß sowohl die Fertigungstoleranzen des Filters als auch die der Filteraufnahme ausgeglichen werden können, wobei eine ausreichende Dickenverformung und damit eine gewisse Rückstellkraft eine kraftschlüssige Passung zur Filteraufnahme gewährleistet, welche für die Abdichtung erforderlich ist. Die Grenze für die maximale Dicke des Rahmenmaterials wird durch den sinnvollen Materialeinsatz bestimmt. Zu breite Rahmenmaterialien erfordern bei einem vorgegebenen Bauraum zu schmale Filtermedienflächen. Das wirkt sich auf die Leistungsdaten des Filters negativ aus.

Das Rahmenmaterial besteht - wie bereits beschrieben worden ist - vorzugsweise aus einem vermaschten Vliesstoff. Weitere Ausbildungen oder Kombinationen mit thermisch und/oder mechanischen verfestigten Vliesen, Gewirken, Geweben und/oder einem Schaumstoff sind möglich. Eine textile Ausgestaltung der Außenseite des Rahmenmaterials erleichtert in vorteilhafter Weise den Einbau des erfindungsgemäßen Filters. Das ist insbesondere dann von Vorteil, wenn der erfindungsgemäße Filter in eine schachtartig ausgebildete Filteraufnahme geschoben werden muß. Eine solche textile Ausgestaltung der Außenseite des Rahmenmaterials erleichtert das Gleiten des Filters im Vergleich mit herkömmlichen PU-Schaumdichtsystemen erheblich. Dadurch, daß das verwendete Rahmenmaterial in seiner Längsrichtung nur gering dehnbar ist, wird das Handling im Konfektionierungsprozeß erleichtert. Die Höchstzugkraftdehnung in Querrichtung des streifenförmigen Rahmenmaterials ist um den Faktor 2 bis 6 größer als die Höchstzugkraftdehnung in Längsrichtung. Die Dicke des Rahmenmaterials liegt zwischen 2,8 und 7,5 mm, vorzugsweise zwischen 3,2 und 4,7 mm, wie bereits beschrieben worden ist. Die untere Grenze der Dicke des Rahmenmaterials wird nicht nur durch die bereits erwähnte Gleichmäßigkeit des Materials sondern auch durch die Durchdringung mit Klebstoff bestimmt. Eine solche Durchdringung mit Klebstoff würde an den Außenseiten des Filters zu unerwünschten Flecken führen.

Das Maß der Abdichtung zwischen dem Filter und der Filteraufnahme wird bei einer Leckluftprüfung ermittelt. Eine 100%-ige Abdichtung ist in keinem Fall erreichbar. Mit dem erfindungsgemäßen Filter sind Leckluftmengen von < 1%, gemessen bei einem Luftdurchsatz von 5000 l/min, erreichbar. Das entspricht in etwa dem Wert eines Filters mit starren Rahmenelementen und zusätzlichem PU-Dichtband. Bei hochwertigen Filtersystemen, insbesondere für die Geruchsfiltration in einem Fahrzeug, kann sich bereits eine sehr kleine Leckluftmenge störend bemerkbar machen. Zu deren Vermeidung ist es möglich, die Fasern des Rahmenmaterials in wenigstens einem vorgeschalteten Arbeitsschritt mit Aktivkohlepulver zu beschichten. Dabei erleichtert die überwiegend in Dickenrichtung des Rahmenmaterials verlaufende Faserorientierung das Einbringen der Aktivkohlepartikel in die Tiefe des Rahmenmaterials, so daß das Rahmenmaterial vollständig mit der Aktivkohle imprägniert werden kann. Mit einer solchen Ausbildung werden der Restluftmenge, die entweder durch das Rahmenmaterial oder an diesem unmittelbar vorbeiströmt, die Geruchs- und Schadstoffe entzogen. Auf diese Weise ergibt sich folglich ein aktives Dichtsystem, das Geruch bindet bzw. ausfiltert.

Für den Aktivkohleauftrag können alle bekannten textilen Applikationsverfahren wie Foulardieren, Pflatschen, Sprühen o.dgl. zur Anwendung kommen. Vorzugsweise erfolgt die Applikation in einer Paste mittels Foulard. Auf diese Weise ist für eine wirksame Geruchs- und Schadstoffadsorption eine Aktivkohlebeladung von 100 bis 300 g/m², vorzugsweise von 150 bis 250 g/m², in das streifenförmige Rahmenmaterial einbringbar.

Erfindungsgemäß ist es möglich, daß an einer Seite des plissierten Filterpacks an den Firsten der Faltung des Filterpacks, die Faltung überspannend, mindestens ein Streifenelement befestigt ist, das sich quer zur Faltung des Filterpacks in dessen Längsrichtung erstreckt.

Durch eine solche Ausbildung des flexiblen Filters wird erreicht, daß der Filterpack auf der das mindestens eine Streifenelement aufweisenden Seite in Längsrichtung der Faltung des Filterpacks im Vergleich zur gegenüberliegenden Seite des Filterpacks einfach und kraftsparend biegbar ist. Der erfindungsgemäße flexible Filter kann also in vorteilhafter Weise das sogenannte Poka Yoke-Prinzip nutzen, d.h. es ist einfach vermeidbar, daß beim Einbau des flexiblen Filters in eine zugehörige Filteraufnahme die Anströmseite und die Abströmseite verwechselt werden. Beim erfindungsgemäßen flexiblen Filter weist die flexible Biegeseite, d.h. die das mindestens eine Streifenelement aufweisende Seite des plissierten Filterpacks z.B. auf die Einbaurichtung hin. Die entgegengesetzte, d.h. falsche Einbaurichtung, macht sich durch einen erhöhten Einbauwiderstand bemerkbar, weil der Filterpack bzw. der flexible Filter auf der vom mindestens einen Streifenelement abgewandten Seite kaum oder quasi nicht biegbar ist.

Bei einem flexiblen Filter mit mindestens einem an den Firsten der Faltung des Filterpacks, die Faltung überspannend, befestigten Streifenelement wird eine Stauchung des Filters weiter verbessert vermieden. Durch die Breitenabmessungen des mindestens einen Streifenelementes und/oder durch die Anzahl voneinander und von den beiden streifenförmigen Rahmenelementen beabstandeten Streifenelemente kann die Flexibilität des erfindungsgemäßen Filters wunschgemäß gezielt eingestellt werden.

Das mindestens eine Streifenelement kann an der Anströmseite oder an der Abströmseite des erfindungsgemäßen Filters fixiert sein.

Das mindestens eine Streifenelement besteht vorzugsweise aus einem dehnungsarmen oder aus einem nicht dehnbaren flexiblen Material. Das mindestens eine Streifenelement ist an den Firsten der Faltung des Filterpacks vorzugsweise mittels eines Klebers befestigt. Dabei kann das mindestens eine Streifenelement mit dem Kleber entweder vollflächig oder partiell bedeckt sein. Erfindungsgemäß weist der Kleber im verfestigten Zustand vorzugsweise eine geringe Flexibilität und Elastizität auf. Bevorzugt kommt als Kleber ein Hotmeltkleber zur Anwendung.

Das mindestens eine Streifenelement des erfindungsgemäßen Filters kann ein voluminöses Vlies sein. Bevorzugt ist es, wenn das mindestens eine Streifenelement ein nach dem Multiknit-Verfahren hergestellter vermaschter Vliesstoff aus PES/Co-PES ist.

Das mindestens eine Streifenelement kann mit Adsorberpartikeln, vorzugsweise mit Aktivkohle, ausgerüstet sein.

Um bezüglich der einseitigen Biegbarkeit bzw. Flexibilität gleichförmig symmetrische Eigenschaften zu erzielen, ist es zweckmäßig, wenn das mindestens eine Streifenelement von den beiden streifenförmigen Rahmenelementen des Filterpacks äquidistant beabstandet ist.

Weitere Einzelheiten, Merkmale und Vorteile ergeben sich aus der nachfolgenden Beschreibung eines in der Zeichnung dargestellten Ausführungsbeispieles des erfindungsgemäßen flexiblen Filters.

Es zeigen:
- Figur 1: ein Ausführungsbeispiel des flexiblen Filters in einer räumlichen Darstellung,
- Figur 2: eine andere Ausbildung des flexiblen Filters in einer räumlichen Darstellung,
- Figur 3: einen Abschnitt des Filters gemäß Figur 2 in einer Ansicht von oben,
- Figur 4: eine Seitenansicht des Filters gemäß Figur 3 teilweise aufgeschnitten, und
- Figur 5: eine Stirnansicht des Filters gemäß den Figuren 3 und 4.

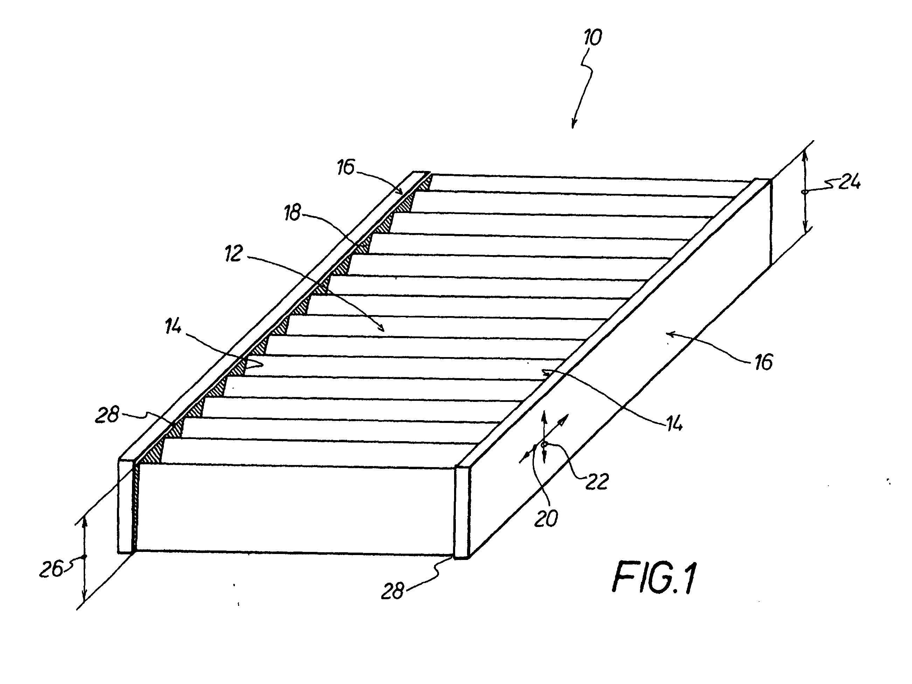

Figur 1 zeigt in einer perspektivischen Ansicht eine Ausbildung des flexiblen Filters 10, der durch die zu reinigende Luft nicht nennenswert verformbar ist. Der flexible Filter 10 weist einen plissierten Filterpack 12 auf, an dessen gefalteten Längsseiten 14 streifenförmige Rahmenelemente 16 mittels eines Klebers 18 fixiert sind. Die beiden streifenförmigen Rahmenelemente 16 weisen in ihrer Längsrichtung eine Dehnung auf, die kleiner ist als die Dehnung in ihrer Querrichtung. Die Längsrichtung ist durch den Doppelpfeil 20 und die Querrichtung ist durch den Doppelpfeil 22 angedeutet.

Jedes der beiden streifenförmigen Rahmenelemente 16 weist eine Querabmessung 24 auf, die größer ist als die Höhenabmessung 26 des plissierten Filterpacks 12. Die streifenförmigen Rahmenelemente 16 stehen anströmseitig und abströmseitig jeweils mit einem Überstand 28 über den plissierten Filterpack 12 über. Die Überstände 28 sind von einer Beschichtung mit dem Kleber 18 frei.

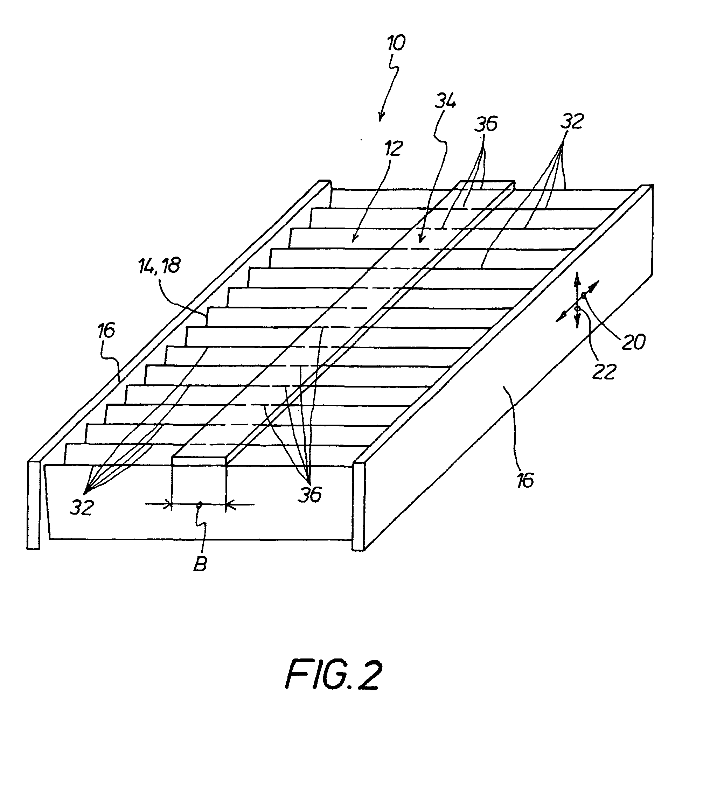

Die Figuren 2 bis 5 zeigen einen dem Filter gemäß Figur 1 ähnlichen flexiblen Filter 10, der in seiner Längsrichtung beispielsweise durch einen Schacht in eine Filteraufnahme beispielsweise eines Kraftfahrzeuges eingeschoben werden kann und der durch die zu reinigende Luft nicht nennenswert verformbar ist. Der flexible Filter 10 weist einen plissierten Filterpack 12 auf. An den zick-zack-förmig gefalteten Längsseiten 14 des Filterpacks 12 sind streifenförmige Rahmenelemente 16 mittels eines Klebers 18 festgeklebt. Zu diesem Zwecke werden beispielsweise die zick-zack-förmig gefalteten Längsseiten 14 des plissierten Filterpacks 12 mit dem Kleber 18 beschichtet. Anschließend werden die streifenförmigen Rahmenelemente 16 an die gefalteten Längsseiten 14 des Filterpacks 12 angefügt und die streifenförmigen Rahmenelemente 16 mit dem plissierten Filterpack 12 fest verbunden.

Die beiden streifenförmigen Rahmenelemente 16 weisen in ihrer Längsrichtung 20 eine Dehnung auf, die kleiner ist als die Dehnung in ihrer Querrichtung 22.

An einer Seite des plissierten Filterpacks 12, bei der es sich um die Anströmseite oder um die Abströmseite handelt, ist an den Firsten 32 der Faltung des Filterpacks 12, die Faltung überspannend, ein Streifenelement 4 befestigt, das sich quere zur Faltung des Filterpacks 12 in dessen Längsrichtung erstreckt. Das Streifenelement 4 besteht aus einem dehnungsarmen oder nicht dehnbaren flexiblen Material. Das Streifenelement 4 ist an den Firsten 32 des plissierten Filterpacks 12 mittels eines Klebers 36 fixiert, bei dem es sich vorzugsweise um einen Hotmeltkleber handelt.

Das Streifenelement 34 weist eine definierte Breitenabmessung B auf, es ist von den beiden streifenförmigen Rahmenelementen 16 des Filters 10 äquidistant beabstandet.

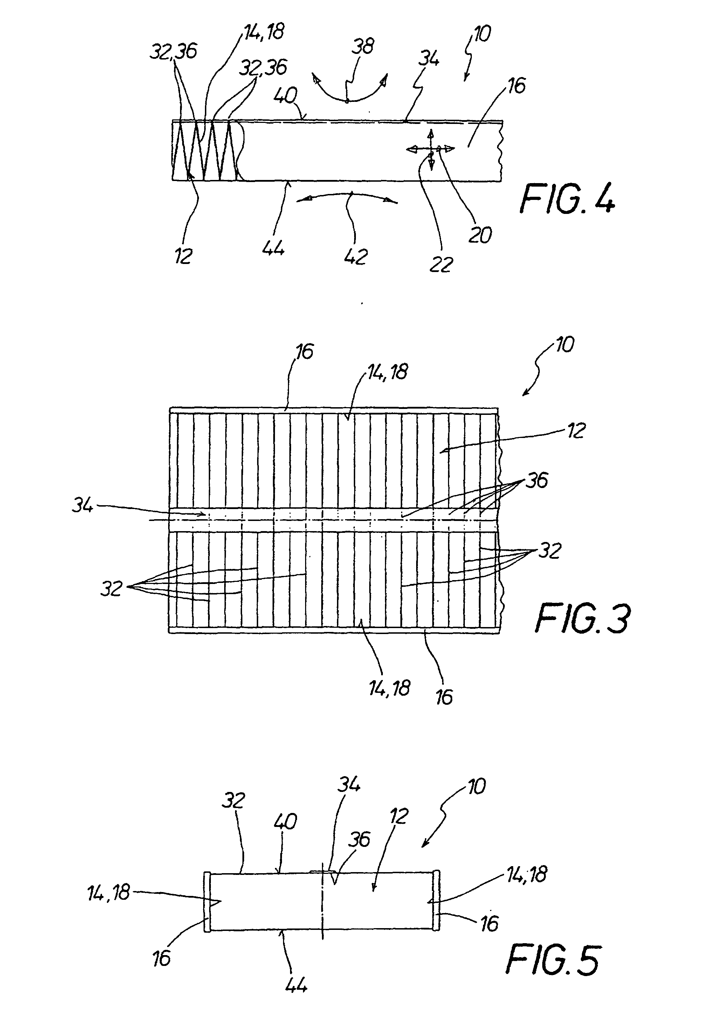

In Figur 4 ist durch den bogenförmigen Pfeil 38 mit dem relativ kleinen Krümmungsradius angedeutet, daß der flexible Filter 10 auf der das Streifenelement 34 aufweisenden Seite 40 gut biegbar ist, d.h,. eine hohe Flexibilität besitzt. Durch den bogenförmigen Pfeil 42 mit dem relativ großen Krümmungsradius ist in Figur 4 angedeutet, daß die dem Streifenelement 34 gegenüberliegende Seite 44 des Filters 10 kaum bzw. quasi nicht biegbar ist, d.h. auf der Seite 44 im Vergleich zur Seite 40 nur eine sehr geringe Flexibilität besitzt.

## Patentansprüche

1. Flexibler Filter, der durch die zu reinigende Luft nicht nennenswert verformbar ist und der einen plissierten Filterpack (12) aufweist, an dessen gefalteten Längsseiten jeweils ein streifenförmiges Rahmenelement (16) mittels eines Klebers (18) fixiert ist,
**dadurch gekennzeichnet,**
**daß** die streifenförmigen Rahmenelemente (16) in ihrer Längsrichtung (20) eine Höchstzugkraft-Dehnung aufweisen, die kleiner ist als die Höchstzugkraft-Dehnung in ihre Querrichtung (22).

2. Flexibler Filter nach Anspruch 1,
**dadurch gekennzeichnet,**
**daß** das jeweilige streifenförmige Rahmenelement (16) ein voluminöses Vlies ist.

3. Flexibler Filter nach Anspruch 2,
**dadurch gekennzeichnet,**
**daß** das jeweilige streifenförmige Rahmenelement (16) ein nach dem Multiknit-Verfahren hergestellter vermaschter Vliesstoff aus PES/Co-PES ist.

4. Flexibler Filter nach einem der Ansprüche 1 bis 3,
**dadurch gekennzeichnet,**
**daß** das jeweilige streifenförmige Rahmenelement mit Aktivkohle ausgerüstet ist.

5. Flexibler Filter insbesondere nach einem der Ansprüche 1 bis 4,
**dadurch gekennzeichnet,**
**daß** die Flexibilität des jeweiligen streifenförmigen Rahmenelementes durch die Dicke der auf das streifenförmige Rahmenelement aufgebrachten Kleberschicht (18) bestimmt ist.

6. Flexibler Filter nach einem der Ansprüche 1 bis 5,
**dadurch gekennzeichnet,**
**daß** der Kleber (18) im verfestigten Zustand eine geringe Flexibilität und/oder Elastizität aufweist.

7. Flexibler Filter nach Anspruch 6,
**dadurch gekennzeichnet,**
**daß** der Kleber (18) ein Hotmeltkleber ist.

8. Flexibler Filter nach einem der Ansprüche 1 bis 7,
**dadurch gekennzeichnet,**
**daß** das jeweilige streifenförmige Rahmenelement an seinem konvex auszuwölbenden Längsrand zur Erhöhung seiner Flexibilität Einschnitte aufweist.

9. Flexibler Filter nach einem der Ansprüche 1 bis 8,
**dadurch gekennzeichnet,**
**daß** die Querabmessung (24) des jeweiligen streifenförmigen Rahmenelementes (16) größer ist als die Höhenabmessung (26) des plissierten Filterpacks (12), wobei die streifeilförmigen Rahmenelemente (16) anströmseitig und abströmseitig mit einem Überstand (28) geringfügig über den plissierten Filterpack (12) überstehen.

10. Flexibler Filter nach Anspruch 9,
**dadurch gekennzeichnet,**
**daß** der Überstand (28) ≤ 2 mm beträgt.

11. Flexibler Filter nach einem der Ansprüche 1 bis 10,
**dadurch gekennzeichnet,**
**daß** an einer Seite (40 oder 44) des plissierten Filterpacks (12) an den Firsten (32) der Faltung des Filterpacks (12), die Faltung überspannend, mindestens ein Streifenelement (34) befestigt ist, das sich quere zur Faltung des Filterpacks (12) in dessen Längsrichtung erstreckt.

12. Flexibler Filter nach Anspruch 11,
**dadurch gekennzeichnet,**
**daß** das mindestens eine Streifenelement (34) aus einem dehnungsarmen oder nicht dehnbaren flexiblen Material besteht.

13. Flexibler Filter nach Anspruch 11,
**dadurch gekennzeichnet,**
**daß** das mindestens eine Streifenelement (34) an den Firsten (32) der Faltung des Filterpacks (12) mittels eines Klebers (36) befestigt ist.

14. Flexibler Filter nach Anspruch 13,
**dadurch gekennzeichnet,**
**daß** das mindestens eine Streifenelement (34) mit dem Kleber (36) vollflächig oder partiell bedeckt ist.

15. Flexibler Filter nach Anspruch 13 oder 14,
**dadurch gekennzeichnet,**
**daß** der Kleber (36) im verfestigten Zustand eine geringe Flexibilität und Elastizität aufweist.

16. Flexibler Filter nach Anspruch 15,
**dadurch gekennzeichnet,**
**daß** der Kleber (36) ein Hotmeltkleber ist.

17. Flexibler nach einem der Ansprüche 11 bis 16,
**dadurch gekennzeichnet,**
**daß** das mindestens eine Streifenelement (34) ein voluminöses Vlies ist.

18. Flexibler Filter nach Anspruch 17,
**dadurch gekennzeichnet,**
**daß** das mindestens eine Streifenelement (34) ein nach dem Multiknit-Verfahren hergestellter vermaschter Vliesstoff aus PES/Co-PES ist.

19. Flexibler Filter nach einem der Ansprüche 11 bis 18
**dadurch gekennzeichnet,**
**daß** das mindestens eine Streifenelement (34) mit Adsorberpartikeln, vorzugsweise mit Aktivkohle, ausgerüstet ist.

20. Flexibler Filter nach einem der Ansprüche 11 bis 19,
**dadurch gekennzeichnet,**
**daß** das mindestens eine Streifenelement (34) von den beiden streifenförmigen Rahmenelementen (169 äquidistant beabstandet ist.

## Claims

1. Flexible filter, which is not deformed to any significant degree by the air which is to be purified, and which has a pleated filter pack (12), on the folded longitudinal sides of which in each case a strip-shaped frame element (16) is secured by means of an adhesive (18), **characterised in that** the strip-shaped frame elements (16) have a maximum tensile force elongation in their longitudinal direction (20) which is less than the maximum tensile force elongation in their transverse direction (22).

2. Flexible filter according to Claim 1, **characterised in that** the individual strip-shaped frame element (16) in each case is a voluminous non-woven material.

3. Flexible filter according to Claim 2, **characterised in that** the individual strip-shaped frame element (16) in each case is an intermeshed non-woven material made of PES/Co-PES, manufactured according to the Multiknit process.

4. Flexible filter according to any one of Claims 1 to 3, **characterised in that** the individual strip-shaped frame element in each case is provided with activated carbon.

5. Flexible filter in particular according to any one of Claims 1 to 4, **characterised in that** the flexibility of the individual strip-shaped frame element in each case is determined by the thickness of the adhesive layer (18) applied onto the strip-shaped frame element.

6. Flexible filter according to any one of Claims 1 to 5, **characterised in that** the adhesive (18) in the solidified state has low flexibility and/or elasticity.

7. Flexible filter according to Claim 6, **characterised in that** the adhesive (18) is a hot-melt adhesive.

8. Flexible filter according to any one of Claims 1 to 7, **characterised in that** the individual strip-shaped frame element in each case has incisions on its convex longitudinal edge which is to be cambered, in order to increase its flexibility.

9. Flexible filter according to any one of Claims 1 to 8, **characterised in that** the transverse dimension (24) of the individual strip-shaped frame element (16) in each case is greater than the height dimension (26) of the pleated filter pack (12), whereby the strip-shaped frame elements (16) project on the inflow side and outflow side by a projection (28) slightly over the pleated filter pack (12).

10. Flexible filter according to Claim 9, **characterised in that** the projection (28) is ≤ 2 mm.

11. Flexible filter according to any one of Claims 1 to 10, **characterised in that** on one side (40 or 44) of the pleated filter pack (12), at the pleats (32) of the folding of the filter pack (12), at least one strip element (34) is secured, spanning the fold, said element extending transversely to the fold of the filter pack (12) in its longitudinal direction.

12. Flexible filter according to Claim 11, **characterised in that** the at least one strip element (34) consists of a flexible material which is of low extension or not extendible.

13. Flexible filter according to Claim 11, **characterised in that** the at least one strip element (34) is secured to the pleats (32) of the folding of the filter pack (12) by means of an adhesive (36).

14. Flexible filter according to Claim 13, **characterised in that** the at least one strip element (34) is covered by the adhesive (36) full-surface or partially.

15. Flexible filter according to Claim 13 or 14, **characterised in that** the adhesive (36) in the solidified state has low flexibility and elasticity.

16. Flexible filter according to Claim 15, **characterised in that** the adhesive (36) is a hot-melt adhesive.

17. Flexible filter according to any one of Claims 11 to 16, **characterised in that** the at least one strip element (34) is a voluminous non-woven material.

18. Flexible filter according to Claim 17, **characterised in that** the at least one strip element (34) is an intermeshed non-woven material made of PES/Co-PES, manufactured according to the Multiknit process.

19. Flexible filter according to any one of Claims 11 to 18, **characterised in that** the at least one strip element (34) is provided with adsorber particles, preferably with activated carbon.

20. Flexible filter according to any one of Claims 11 to 19, **characterised in that** the at least one strip element (34) is located equidistant from the two strip-shaped frame elements (16).

## Revendications

1. Filtre flexible qui n'est pas déformable de manière significative par l'air à purifier et qui comprend une garniture filtrante plissée (12), sur les côtés longitudinaux pliés de laquelle un élément de cadre en forme de lame (16) est fixé respectivement au moyen d'une colle (18), **caractérisé en ce que** les éléments de cadre en forme de lame (16) sont soumis dans leur direction longitudinale (20) à une dilatation à la force de traction maximale qui est moins importante que la dilatation à la force de traction maximale dans leur direction transversale (22).

2. Filtre flexible selon la revendication 1, **caractérisé en ce que** l'élément de cadre en forme de lame respectif (16) est une nappe de fibre volumineuse.

3. Filtre flexible selon la revendication 2, **caractérisé en ce que** l'élément de cadre en forme de lame respectif (16) est une étoffe de nappe de fibre à maillage en PES/Co-PES réalisée avec le procédé de multi-froissement.

4. Filtre flexible selon l'une quelconque des revendications 1 à 3, **caractérisé en ce que** l'élément de cadre en forme de lame respectif (16) est équipé de charbon actif.

5. Filtre flexible en particulier selon l'une quelconque des revendications 1 à 4, **caractérisé en ce que** la flexibilité de l'élément de cadre en forme de lame respectif est déterminée par l'épaisseur de la couche de colle (18) appliquée sur l'élément de cadre en forme de lame.

6. Filtre flexible selon l'une quelconque des revendications 1 à 5, **caractérisé en ce que** dans l'état solidifié la colle (18) a une flexibilité et/ou une élasticité faibles.

7. Filtre flexible selon la revendication 6, **caractérisé en ce que** la colle (18) est une colle thermofusible.

8. Filtre flexible selon l'une quelconque des revendications 1 à 7, **caractérisé en ce que**, pour augmenter sa flexibilité, l'élément de cadre en forme de lame respectif comprend des entailles sur son bord longitudinal qui doit être soumis à une courbure convexe.

9. Filtre flexible selon l'une quelconque des revendications 1 à 8, **caractérisé en ce que** la dimension transversale (24) de l'élément de cadre en forme de lame respectif (16) est plus grande que la dimension en hauteur (26) de la garniture filtrante plissée (12), les éléments de cadre en forme de lame respectif (16) dépassant, du côté de l'arrivée du flux et du côté du départ du flux, légèrement au-delà de la garniture filtrante plissée (12) avec un dépassement (28).

10. Filtre flexible selon la revendication 9, **caractérisé en ce que** le dépassement (28) est ≤ 2 mm.

11. Filtre flexible selon l'une quelconque des revendications 1 à 10, **caractérisé en ce que**, sur un côté (40 ou 44) de la garniture filtrante plissée (12), au moins un élément de lame (34) passant par-dessus le plissage et s'étendant transversalement au plissage de la garniture filtrante (12) dans la direction longitudinale de celle-ci est fixé sur les faîtes (32) du plissage de la garniture filtrante (12).

12. Filtre flexible selon la revendication 11, **caractérisé en ce que** l'au moins un élément de lame (34) est formé par un matériau flexible à faible dilatation ou non-dilatable.

13. Filtre flexible selon la revendication 11, **caractérisé en ce que** l'au moins un élément de lame (34) est fixé à l'aide d'une colle (36) sur les faîtes (32) du plissage de la garniture filtrante (12).

14. Filtre flexible selon la revendication 13, **caractérisé en ce que** l'au moins un élément de lame (34) est recouvert sur toute sa surface ou partiellement par la colle (36).

15. Filtre flexible selon la revendication 13 ou 14, **caractérisé en ce que** dans son état solidifié la colle (36) a une flexibilité et/ou une élasticité faibles.

16. Filtre flexible selon la revendication 15, **caractérisé en ce que** la colle (36) est une colle thermofusible.

17. Filtre flexible selon l'une quelconque des revendications 11 à 16, **caractérisé en ce que** l'au moins un élément de lame (34) est une nappe de fibre volumineuse.

18. Filtre flexible selon la revendication 17, **caractérisé en ce que** l'au moins un élément de lame (34) est une étoffe de nappe de fibre à maillage en PES/Co-PES réalisée avec le procédé de multi-froissement.

19. Filtre flexible selon l'une quelconque des revendications 11 à 18, **caractérisé en ce que** l'au moins un élément de lame (34) est muni de particules d'adsorbant, de préférence avec du charbon actif.

20. Filtre flexible selon l'une quelconque des revendications 11 à 19, **caractérisé en ce que** l'au moins un élément de lame (34) est espacé de manière équidistante des deux éléments de cadre en forme de lame (16).
